# EUROPEAN PATENT APPLICATION

(11) **EP 4 746 385 A1**
(43) Date of publication of application: **20.05.2026**
(21) Application number: 24853493.5
(22) Date of filing: 19.07.2024
(51) Int. Cl.: H04L 69/06

(54) **COMMUNICATION METHOD AND APPARATUS**

(30) Priority: 11.08.2023 CN 202311017692
(71) Applicant: Huawei Technologies Co., Ltd., Shenzhen, Guangdong 518129 (CN)
(72) Inventor: XU, Bin, Shenzhen, Guangdong 518129 (CN); SHI, Yulong, Shenzhen, Guangdong 518129 (CN)
(74) Representative: Isarpatent
(86) International application number: PCT/CN2024/106371
(87) International publication number: WO 2025/036081

(57) **Abstract**

A communication method and a communication apparatus are provided. The communication method includes: A transmit end sends a MAC subPDU to a receive end, where an RRC message included in the MAC subPDU includes one or more of a UL CCCH message, a UL CCCH1 message, or a UL DCCH message. Specifically, a header of the MAC subPDU includes an LCID field, and the transmit end may perform, by using the LCID field, transmission of indication information for auxiliary communication. In addition, the MAC subPDU further includes a first field, and when values of the first field are different, meanings represented by the LCID field are determined based on different LCID tables. The first field is carried in the MAC subPDU, so that a meaning represented by the LCID field can be determined based on a value of the first field and a value of the LCID field, no longer depending on only the value of the LCID field. Therefore, more indication information can be indicated by the LCID field, thereby improving user experience.

## Description

This application claims priority to Chinese Patent Application No. 202311017692.6, filed with the China National Intellectual Property Administration on August 11, 2023 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

In wireless communication, a transmit end and a receive end may exchange some indication information for auxiliary communication, for example, information indicating a device type and information indicating a logical channel. The indication information may be carried in messages of a plurality of protocol layers, including but not limited to being carried in a radio resource control (radio resource control, RRC) message or a media access control (media access control, MAC) data packet. When the indication information is carried in the MAC data packet, the indication information may be carried in a packet header of a MAC packet data unit (packet data unit, PDU), a MAC service data unit (service data unit, SDU), or a MAC control element (control element, CE).

The indication information may be indicated by an LCID field in the packet header of the MAC PDU. However, with evolution of the standard, more content that needs to be indicated is introduced into the standard, and existing LCID indication manners have far from met requirements. Therefore, how to indicate more content by existing fields becomes a problem to be urgently resolved.

### SUMMARY

This application provides a communication method, so that more indication information can be indicated by an existing field, thereby enriching service types of a terminal device and improving user experience.

According to a first aspect, a communication method is provided. The method may be performed by a transmit end. The transmit end may be a terminal device, a network device, a chip of the terminal device, a chip of the network device, or the like. This is not limited.

The communication method includes: determining a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, and the MAC subPDU includes a first field; and sending the MAC subPDU, where when values of the first field are different, meanings represented by the LCID field are determined based on different LCID tables.

Based on the foregoing solution, in addition to the LCID field, the MAC subPDU determined by the transmit end further includes the first field that affects a meaning represented by the LCID field. Specifically, a value of the first field indicates a specific LCID table based on which the meaning represented by the LCID field is determined, so that the meaning represented by the LCID field can be determined based on the value of the first field and a value of the LCID field, no longer depending on only the value of the LCID field. Therefore, more indication information can be indicated by the LCID field. For example, in this solution, there may be a plurality of LCID tables that represent values of LCID fields and meanings represented by the LCID fields. For actually determining a meaning represented by the LCID field, a used LCID table may be first determined based on a value of the first field, and then the meaning represented by the LCID field is determined based on a value of the LCID field and the determined LCID table. In comparison with determining the meaning represented by the LCID field based only on a value of the LCID field, the more indication information is indicated by the LCID field. Further, information that can be indicated by the LCID field is extended, thereby enriching service types of the terminal device and improving user experience.

With reference to the first aspect, in some implementations of the first aspect, that the MAC subPDU includes the first field includes: The header of the MAC subPDU includes the first field; or the RRC message includes the first field.

Based on the foregoing solution, the first field may be carried in the header of the MAC subPDU, or may be carried in the RRC message in the MAC subPDU. A specific manner of carrying the first field is not limited in this solution. The first field may serve as a field in the header of the MAC subPDU, or may serve as a field in the RRC message in the MAC subPDU, to improve flexibility of the solution.

With reference to the first aspect, in some implementations of the first aspect, the LCID table is a correspondence between an index value of the LCID field and a meaning represented by the index value of the LCID field.

With reference to the first aspect, in some implementations of the first aspect, before sending the MAC subPDU, the method further includes: determining that a receive end supports parsing of the MAC subPDU.

Based on the foregoing solution, before sending the MAC subPDU to the receive end, the transmit end may determine that the receive end supports parsing of the MAC subPDU, to avoid a communication error caused because the MAC subPDU sent to the receive end cannot be correctly parsed by the receive end.

With reference to the first aspect, in some implementations of the first aspect, the determining that the receive end supports parsing of the MAC subPDU includes: receiving indication information, where the indication information indicates that the receive end supports parsing of the MAC subPDU; or determining, depending on whether the receive end supports a feature indicated by the MAC subPDU, that the receive end supports parsing of the MAC subPDU.

Based on the foregoing solution, the transmit end may determine, based on the indication information sent by the receive end, that the receive end can parse the MAC subPDU, or the receive end may not need to explicitly send the indication information indicating whether parsing of the MAC subPDU is supported, and the transmit end determines, based on the feature supported by the receive end, that the receive end supports parsing of the corresponding MAC subPDU. In this solution, the transmit end may determine, in different manners, whether the receive end supports parsing of a to-be-sent MAC subPDU, to improve flexibility of the solution.

With reference to the first aspect, in some implementations of the first aspect, the indication information is carried in dedicated signaling, multicast signaling, or broadcast signaling.

Based on the foregoing solution, a manner in which the receive end sends the indication information to the transmit end may be in a broadcast, multicast, or unicast form. This is not limited in this solution.

With reference to the first aspect, in some implementations of the first aspect, the sending the MAC subPDU includes: sending the MAC subPDU during random access procedure.

With reference to the first aspect, in some implementations of the first aspect, if the first field is carried in the header of the MAC subPDU, a size of the header of the MAC subPDU is one byte, a size of the LCID field is six bits, and a size of the first field is one bit or two bits.

With reference to the first aspect, in some implementations of the first aspect, if the first field is carried in the RRC message in the MAC subPDU, a size of the header of the MAC subPDU is one byte, the header of the MAC subPDU further includes two reserved fields, a size of the LCID field is six bits, and a size of each reserved field is one bit.

Based on the foregoing solution, the size of the header of the MAC subPDU is one byte. To be specific, in this solution, more indication information may be indicated by the LCID field without increasing the size of the MAC subPDU. Further, information that can be indicated by the LCID field is extended, thereby enriching service types of the terminal device and improving user experience.

According to a second aspect, a communication method is provided. The method may be performed by a receive end. A transmit end may be a terminal device, a network device, a chip of the terminal device, a chip of the network device, or the like. This is not limited. For example, the transmit end in the first aspect is the terminal device or the chip of the terminal device, and the receive end may be the network device or the chip of the network device.

The communication method includes: receiving a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, and the MAC subPDU includes a first field; and determining, based on a value of the first field and a value of the LCID field, a meaning represented by the LCID field, where when values of the first field are different, meanings represented by the LCID field are determined based on different LCID tables.

With reference to the second aspect, in some implementations of the second aspect, that the MAC subPDU includes the first field includes: The header of the MAC subPDU includes the first field; or the RRC message includes the first field.

With reference to the second aspect, in some implementations of the second aspect, the LCID table is a correspondence between an index value of the LCID field and a meaning represented by the index value of the LCID field.

With reference to the second aspect, in some implementations of the second aspect, before receiving the MAC subPDU, the method further includes: sending indication information, where the indication information indicates that parsing of the MAC subPDU is supported. For related descriptions of the indication information, refer to the descriptions of the first aspect. Details are not described herein again.

With reference to the second aspect, in some implementations of the second aspect, the indication information is carried in dedicated signaling, multicast signaling, or broadcast signaling.

With reference to the second aspect, in some implementations of the second aspect, the receiving the MAC subPDU includes: receiving the MAC subPDU during random access procedure.

With reference to the second aspect, in some implementations of the second aspect, if the first field is carried in the header of the MAC subPDU, a size of the header of the MAC subPDU is one byte, a size of the LCID field is six bits, and a size of the first field is one bit or two bits.

With reference to the second aspect, in some implementations of the second aspect, if the first field is carried in the RRC message in the MAC subPDU, a size of the header of the MAC subPDU is one byte, the header of the MAC subPDU further includes two reserved fields, a size of the LCID field is six bits, and a size of each reserved field is one bit.

For technical effects of the method shown in the second aspect and the possible designs of the second aspect, refer to the technical effects in the first aspect and the possible designs of the first aspect.

According to a third aspect, a communication method is provided. The method may be performed by a transmit end. The transmit end may be a terminal device, a network device, a chip of the terminal device, a chip of the network device, or the like. This is not limited.

The communication method includes: determining a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, a size of the header of the MAC subPDU is one byte, a size of the LCID field is N bits, and N is an integer greater than 6; and sending the MAC subPDU.

Based on the foregoing solution, the size of the LCID field included in the header of the MAC subPDU determined by the transmit end is greater than six bits. In comparison with an LCID field whose size is six bits, the LCID field in this solution has a larger value range and can represent more meanings. Therefore, more indication information can be indicated by the LCID field. Further, information that can be indicated by the LCID field is extended, thereby enriching service types of the terminal device and improving user experience.

With reference to the third aspect, in some implementations of the third aspect, at least one bit in the N bits occupied by the LCID field is a bit occupied by a reserved field in a header of a conventional MAC subPDU, and the header of the conventional MAC subPDU includes a reserved field occupying two bits and an LCID field occupying six bits.

With reference to the third aspect, in some implementations of the third aspect, before sending the MAC subPDU, the method further includes: determining that a receive end supports parsing of the MAC subPDU.

Based on the foregoing solution, before sending the MAC subPDU to the receive end, the transmit end may determine that the receive end supports parsing of the MAC subPDU, to avoid an error caused because the MAC subPDU sent to the receive end cannot be correctly parsed by the receive end.

With reference to the third aspect, in some implementations of the third aspect, the determining that the receive end supports parsing of the MAC subPDU includes: receiving indication information, where the indication information indicates that the receive end supports parsing of the MAC subPDU; or determining, depending on whether the receive end supports a feature indicated by the MAC subPDU, that the receive end supports parsing of the MAC subPDU.

Based on the foregoing solution, the transmit end may determine, based on the indication information sent by the receive end, that the receive end can parse the MAC subPDU, or the receive end may not need to explicitly send the indication information indicating whether parsing of the MAC subPDU is supported, and the transmit end determines, based on the feature supported by the receive end, that the receive end supports parsing of the corresponding MAC subPDU. In this solution, the transmit end may determine, in different manners, whether the receive end supports parsing of a to-be-sent MAC subPDU, to improve flexibility of the solution.

With reference to the third aspect, in some implementations of the third aspect, the indication information is carried in dedicated signaling, multicast signaling, or broadcast signaling.

Based on the foregoing solution, a manner in which the receive end sends the indication information to the transmit end may be in a broadcast, multicast, or unicast form. This is not limited in this solution.

With reference to the third aspect, in some implementations of the third aspect, the sending the MAC subPDU includes: sending the MAC subPDU during random access procedure.

With reference to the third aspect, in some implementations of the third aspect, the header of the MAC subPDU further includes less than two reserved fields.

According to a fourth aspect, a communication method is provided. The method may be performed by a receive end. A transmit end may be a terminal device, a network device, a chip of the terminal device, a chip of the network device, or the like. This is not limited. For example, the transmit end in the third aspect is the terminal device or the chip of the terminal device, and the receive end may be the network device or the chip of the network device.

The communication method includes: receiving a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, a size of the header of the MAC subPDU is one byte, a size of the LCID field is N bits, and N is an integer greater than 6; and determining, based on a value of the LCID field, a meaning represented by the LCID field.

With reference to the fourth aspect, in some implementations of the fourth aspect, before receiving the MAC subPDU, the method further includes: sending indication information, where the indication information indicates that parsing of the MAC subPDU is supported.

With reference to the fourth aspect, in some implementations of the fourth aspect, the indication information is carried in dedicated signaling, multicast signaling, or broadcast signaling.

With reference to the fourth aspect, in some implementations of the fourth aspect, the header of the MAC subPDU further includes less than two reserved fields.

For technical effects of the method shown in the fourth aspect and the possible designs of the fourth aspect, refer to the technical effects in the third aspect and the possible designs of the third aspect.

According to a fifth aspect, a communication apparatus is provided. The apparatus is configured to perform the method provided in the first aspect or the third aspect. Specifically, the apparatus may include a unit and/or a module configured to perform the method provided in any one of the implementations of the first aspect or the third aspect, for example, a processing unit and/or a communication unit.

For example, when the communication apparatus is the transmit end in the first aspect, the processing unit is configured to determine a media access control MAC subpacket data unit PDU, where the MAC subPDU includes a radio resource control RRC message, the RRC message includes an uplink common control channel UL CCCH message, a UL CCCH1 message, or an uplink dedicated control channel UL DCCH message, a header of the MAC subPDU includes a logical channel identity LCID field, and the MAC subPDU includes a first field. The communication unit is configured to send the MAC subPDU, where when values of the first field are different, meanings represented by the LCID field are determined based on different LCID tables.

For example, when the communication apparatus is the transmit end in the third aspect, the processing unit is configured to determine a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, a size of the header of the MAC subPDU is one byte, a size of the LCID field is N bits, and N is an integer greater than 6. The communication unit is configured to send the MAC subPDU.

In an implementation, the apparatus is a terminal device. When the apparatus is the terminal device, the communication unit may be a transceiver or an input/output interface; and the processing unit may be at least one processor. Optionally, the transceiver may be a transceiver circuit. Optionally, the input/output interface may be an input/output circuit.

For example, when the communication apparatus is the transmit end in the first aspect, the processor is configured to determine a media access control MAC subpacket data unit PDU, where the MAC subPDU includes a radio resource control RRC message, the RRC message includes an uplink common control channel UL CCCH message, a UL CCCH1 message, or an uplink dedicated control channel UL DCCH message, a header of the MAC subPDU includes a logical channel identity LCID field, and the MAC subPDU includes a first field. The transceiver is configured to send the MAC subPDU, where when values of the first field are different, meanings represented by the LCID field are determined based on different LCID tables.

For example, when the communication apparatus is the transmit end in the third aspect, the processor is configured to determine a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, a size of the header of the MAC subPDU is one byte, a size of the LCID field is N bits, and N is an integer greater than 6. The transceiver is configured to send the MAC subPDU.

In another implementation, the apparatus is a chip, a chip system, or a circuit used in a terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, a communication apparatus is provided. The apparatus is configured to perform the method provided in the second aspect or the fourth aspect. Specifically, the apparatus may include a unit and/or a module configured to perform the method provided in any one of the implementations of the second aspect or the fourth aspect, for example, a processing unit and/or a communication unit.

For example, when the communication apparatus is the receive end in the second aspect, the communication unit is configured to receive a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, and the MAC subPDU includes a first field. The processing unit is configured to determine, based on a value of the first field and a value of the LCID field, a meaning represented by the LCID field, where when values of the first field are different, meanings represented by the LCID field are determined based on different LCID tables.

For example, when the communication apparatus is the receive end in the fourth aspect, the communication unit is configured to receive a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, a size of the header of the MAC subPDU is one byte, a size of the LCID field is N bits, and N is an integer greater than 6. The processing unit is configured to determine, based on a value of the LCID field, a meaning represented by the LCID field.

In an implementation, the apparatus is a network device. When the apparatus is a network device, the communication unit may be a transceiver or an input/output interface; and the processing unit may be at least one processor. Optionally, the transceiver may be a transceiver circuit. Optionally, the input/output interface may be an input/output circuit.

For example, when the communication apparatus is the receive end in the second aspect, the transceiver is configured to receive a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, and the MAC subPDU includes a first field. The processor is configured to determine, based on a value of the first field and a value of the LCID field, a meaning represented by the LCID field, where when values of the first field are different, meanings represented by the LCID field are determined based on different LCID tables.

For example, when the communication apparatus is the receive end in the fourth aspect, the transceiver is configured to receive a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, a size of the header of the MAC subPDU is one byte, a size of the LCID field is N bits, and N is an integer greater than 6. The processor is configured to determine, based on a value of the LCID field, a meaning represented by the LCID field.

In another implementation, the apparatus is a chip, a chip system, or a circuit used in a network device. When the apparatus is the chip, the chip system, or the circuit used in the network device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a seventh aspect, a communication apparatus is provided. The apparatus includes: a memory, configured to store a program; and at least one processor, configured to execute the computer program or instructions stored in the memory, to perform the method provided in any one of the implementations of the first aspect to the fourth aspect, or any one of the implementations of the second aspect to the fourth aspect.

According to an eighth aspect, this application provides a processor, configured to perform the methods provided in the foregoing aspects.

Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to a ninth aspect, a computer-readable storage medium is provided. The computer-readable medium stores program code executed by a device, and the program code includes instructions for performing the method provided in any one of the implementations of the first aspect to the fourth aspect.

According to a tenth aspect, a computer program product including instructions is provided. When the computer program product runs on a computer, the computer is caused to perform the method provided in any one of the implementations of the first aspect to the fourth aspect.

According to an eleventh aspect, a chip is provided. The chip includes a processor and a communication interface. The processor reads, through the communication interface, instructions stored in a memory, to perform the method provided in any one of the implementations of the first aspect to the fourth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the implementations.

According to a twelfth aspect, a communication system is provided, and includes the transmit end in the first aspect and the receive end in the second aspect.

According to a thirteenth aspect, a communication system is provided, and includes the transmit end in the third aspect and the receive end in the fourth aspect.

### BRIEF DESCRIPTION OF DRAWINGS

FIG. 1 is a diagram of a communication system 100 to which an embodiment of this application is applicable;
FIG. 2 is a diagram of a MAC PDU format;
(a) to (c) in FIG. 3 are diagrams of MAC subheader formats;
FIG. 4 is a schematic flowchart of a communication method according to this application;
FIG. 5 is a block diagram of a communication apparatus 10 according to an embodiment of this application;
FIG. 6 is a diagram of another communication apparatus 20 according to an embodiment of this application; and
FIG. 7 is a diagram of a chip system 30 according to an embodiment of this application.

### DESCRIPTION OF EMBODIMENTS

The following describes technical solutions in embodiments of this application with reference to accompanying drawings.

The technical solutions in embodiments of this application are applied to various communication systems, for example, a 5th generation (5th generation, 5G) system or new radio (new radio, NR), a long term evolution (long term evolution, LTE) system, an LTE frequency division duplex (frequency division duplex, FDD) system, and LTE time division duplex (time division duplex, TDD). The technical solutions provided in this application may be further applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

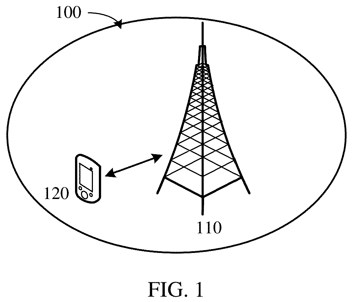

For ease of understanding embodiments of this application, a communication system shown in FIG. 1 is first used as an example to describe in detail a communication system to which embodiments of this application are applicable. FIG. 1 is a diagram of a communication system 100 to which an embodiment of this application is applicable. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other over a radio link. A plurality of antennas may be configured for each communication device, for example, the network device 110 or the terminal device 120. For each communication device in the communication system 100, the configured plurality of antennas may include at least one transmit antenna configured to send a signal and at least one receive antenna configured to receive a signal. Therefore, communication devices in the communication system 100, for example, the network device 110 and the terminal device 120, may communicate with each other by using a multi-antenna technology.

By way of example but not limitation, the network device and the terminal device in the scenario shown in FIG. 1 may communicate in a plurality of manners. For example, the network device and the terminal device communicate with each other in a point-to-point transmission manner or a multi-hop (namely, relay (relay)) transmission manner, a plurality of network devices and a plurality of terminal devices communicate with each other in a dual-connectivity (dual-connectivity, DC) or multi-connectivity transmission manner, and the like.

A communication manner between the network device and the terminal device is not limited in embodiments of this application. For example, transmission between the network device and the terminal device may be on an uplink, a downlink, an access link, a backhaul (backhaul) link, a sidelink (Sidelink), or the like.

In embodiments of this application, the terminal device (terminal equipment) may be an access terminal, a subscriber unit, a subscriber station, a mobile station, a relay station, a remote station, a remote terminal, a mobile device, a user terminal (user terminal), a user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal device in a future 5G network, a terminal device in a future evolved public land mobile communication network (public land mobile network, PLMN), or the like. This is not limited in embodiments of this application.

By way of example but not limitation, in embodiments of this application, the wearable device may also be referred to as a wearable intelligent device, and is a general term of wearable devices that are intelligently designed and developed for daily wear by using a wearable technology, such as glasses, gloves, watches, clothing, and shoes. The wearable device is a portable device that is directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

In addition, in embodiments of this application, the terminal device may alternatively be a terminal device in an IoT system. An IoT is an important part of future development of information technologies. A main technical feature of the IoT is connecting a thing to a network by using a communication technology, to implement an intelligent network for human-machine interconnection and thing-thing interconnection. In embodiments of this application, an IoT technology can implement massive connections, deep coverage, and terminal power saving by using, for example, a narrow band (narrow band, NB) technology.

In embodiments of this application, the network device may be any device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), or the like, may be a gNB or a transmission point (TRP or TP) in a 5G system, for example, NR, one antenna panel or a group of antenna panels (including a plurality of antenna panels) of a base station in the 5G system, or may be a network node, for example, a baseband unit (BBU) or a distributed unit (distributed unit, DU), that constitutes a gNB or a transmission point.

In some deployments, the gNB may include a central unit (central unit, CU) and the DU. The gNB may further include an active antenna unit (active antenna unit, AAU). The CU implements a part of functions of the gNB, and the DU implements a part of the functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in an access network (radio access network, RAN), or the CU may be classified as a network device in a core network (core network, CN). This is not limited in this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program and that is in the terminal device or the network device.

In addition, aspects or features of this application may be implemented as a method, an apparatus, or a product that uses standard programming and/or engineering technologies. The term "product" used in this application covers a computer program that can be accessed from any computer-readable device, carrier or medium. For example, the computer-readable medium may include but is not limited to: a magnetic storage device (for example, a hard disk drive, a floppy disk, or a magnetic tape), an optical disc (for example, a compact disc (compact disc, CD), a digital versatile disc (digital versatile disc, DVD)), a smart card, and a flash memory device (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel and various other media that can store, include, and/or carry instructions and/or data.

It should be understood that FIG. 1 uses the communication between the network device and the terminal device as an example to briefly describe a communication scenario to which this application can be applied, and this does not impose any limitation on another scenario to which this application can be applied.

It should be further understood that FIG. 1 is merely a simplified diagram of an example for ease of understanding. The communication system may further include another network device or may further include another terminal device, which is not shown in FIG. 1.

For example, the communication system may further include a core network device configured to manage configurations of the terminal device and the network device, for example, including an access and mobility management function (access and mobility management function, AMF) network element, a session management function (session management function, SMF) network element, a user plane function (user plane function, UPF) network element, and a policy control function (policy control function, PCF) network element.

To facilitate understanding of the technical solutions in embodiments of this application, before the solutions in embodiments of this application are described on the basis of a 5G architecture, some terms or concepts in 5G that may be used in embodiments of this application are first briefly described.
1. MAC packet data unit (packet data unit, PDU) format: The MAC PDU format includes at least one MAC subPDU (MAC subPDU), where the MAC subPDU includes a MAC subheader (MAC subheader). In addition, the MAC subPDU includes a MAC SDU, a MAC control element (control element, CE), or padding (padding).

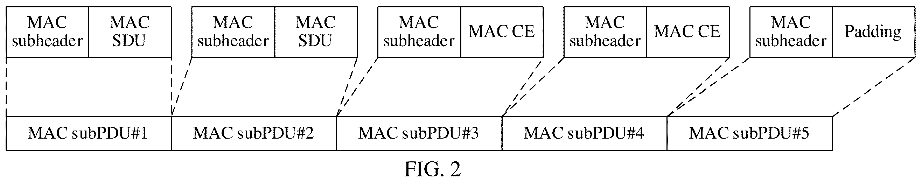

For ease of understanding, the MAC PDU format is briefly described with reference to FIG. 2. It can be learned from FIG. 2 that one MAC PDU includes at least one MAC subPDU (for example, a MAC subPDU#1, a MAC subPDU#2, a MAC subPDU#3, a MAC subPDU#4, and a MAC subPDU#5 shown in FIG. 2), and each MAC subPDU includes a MAC subheader.

For example, the MAC subPDU, for example, the MAC subPDU#1 and the MAC subPDU#2 shown in FIG. 2, may further include a MAC SDU. Optionally, the MAC subPDU including the MAC SDU may be referred to as "MAC subPDU including MAC SDU".

For example, the MAC subPDU, for example, the MAC subPDU#3 and the MAC subPDU#4 shown in FIG. 2, may further include a MAC CE. Optionally, the MAC subPDU including the MAC CE may be referred to as "MAC subPDU including MAC CE". Sizes (sizes) of MAC CEs included in different MAC subPDUs may be different. For example, a MAC CE included in the MAC subPDU#3 is a fixed-sized MAC CE (fixed-sized MAC CE), and a MAC CE included in the MAC subPDU#4 is a variable-sized MAC CE (variable-sized MAC CE).

For example, the MAC subPDU, for example, the MAC subPDU#5 shown in FIG. 2, may further include padding. Optionally, the MAC subPDU including the padding may be referred to as "MAC subPDU including padding".

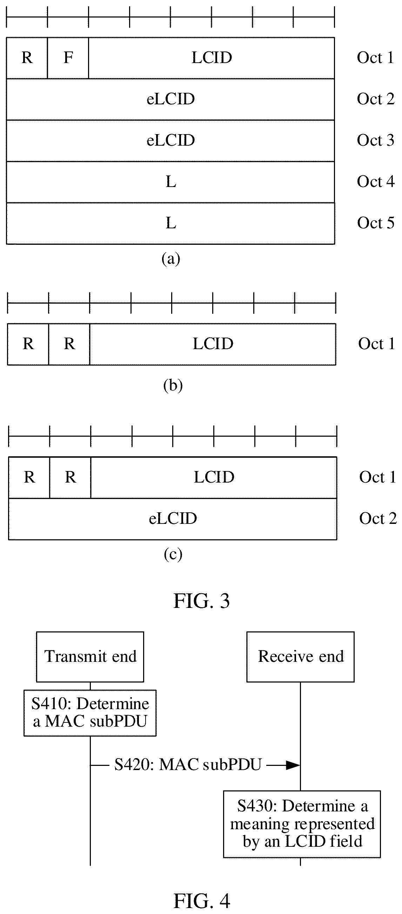

2. MAC subheader: The MAC subheader includes at least one of the following fields: an R field (a reserved field, reserved for future use, and set to 0), an LCID field (a logical channel identity field, for identifying a logical channel instance corresponding to a MAC SDU, identifying a type of a MAC CE, identifying padding, or identifying whether an eLCID field exists), an eLCID field (an extended logical channel identity field, for identifying a logical channel instance corresponding to a MAC SDU or identifying a type of a MAC CE), an L field (a length field, for identifying a length of a corresponding MAC SDU or identifying a length of a variable-sized MAC CE), and an F field (a format field, for identifying a size of the length field), as shown in (a) in FIG. 3.

The MAC subheader has a plurality of formats. In an example, when a MAC SDU included in a MAC subPDU carries a UL CCCH message, a UL CCCH1 message, or an uplink dedicated control channel (Dedicated Control Channel, DCCH) message, a corresponding MAC subheader includes the R field and the LCID field.

For ease of understanding, two possible MAC subheader formats are briefly described with reference to (b) and (c) in FIG. 3.

A MAC subheader shown in (b) in FIG. 3 includes R fields and an LCID field. The R fields and the LCID field occupy one byte (Oct 1 shown in (b) in FIG. 3) in total. In the eight bits, the R fields occupy two bits, and the LCID field occupies six bits.

A MAC subheader shown in (c) in FIG. 3 includes R fields, an LCID field, and an eLCID field. The R fields and the LCID field occupy one byte (Oct 1 shown in (c) in FIG. 3) in total, the R fields occupy two bits, and the LCID field occupies six bits; and the eLCID field occupies one byte (Oct 2 shown in (c) in FIG. 3).

It should be noted that the MAC subheader format shown in (b) in FIG. 3 does not include the eLCID field. An advantage of the MAC subheader in this format is that a size of a MAC PDU does not need to be increased additionally. In a scenario in which uplink coverage is limited, an uplink resource allocated by the access network device during each scheduling is usually small. Because a smaller data packet (including the MAC PDU) to be sent is easier to be successfully sent, unless a scenario in which coverage is not considered, the MAC subheader format in (b) in FIG. 3 is preferentially used. Therefore, the following mainly uses an example in which a MAC subheader format is the MAC subheader format shown in (b) in FIG. 3 for description. When the MAC subheader format is the MAC subheader format shown in (c) in FIG. 3, for setting of an LCID field in the MAC subheader, refer to the setting of the LCID field in the MAC subheader shown in the MAC subheader format shown in (b) in FIG. 3. Descriptions are not repeated.

3. Indication space of an LCID field: As shown above, a size of the LCID field is six bits, and there are 2⁶=64 LCID values of the LCID field. Different LCID values represent different cases, and 64 different cases can be indicated at most. In this case, it may be considered that a size of the indication space of the LCID field is 64. The indication space of the LCID field may be understood as a quantity of pieces of indication information indicated by the LCID field.

As shown in the following Table 1, different LCID values indicate different cases. Currently, 57 LCID values have been used, and seven reserved LCID values may serve as new indications (37 to 42 in bold as shown in Table 1 below may serve as the new indications).

**Table 1**

| Index (Index) or codepoint (Codepoint) | LCID value |
|---|---|
| 0 | CCCH of 64 bits, except for a RedCap device (CCCH of size 64 bits, except for a RedCap UE). Refer to descriptions of a "CCCH1" in TS 38.331. |
| 1 to 32 | Identities of logical channels of a DCCH and a DTCH (Identity of the logical channel of DCCH and DTCH) |
| 33 | Extended logical channel ID field (Extended logical channel ID field) (two-byte eLCID field) |
| 34 | Extended logical channel ID field (Extended logical channel ID field) (one-byte eLCID field) |
| 35 | CCCH of 48 bits, except for a RedCap device (CCCH of size 48 bits, except for a RedCap UE). Refer to descriptions of a "CCCH" in TS 38.331. |
| 36 | CCCH of 64 bits for a RedCap device (CCCH of size 64 bits for a RedCap UE). Refer to descriptions of a "CCCH1" in TS 38.331. |
| **37 to 42** | **Reserved (Reserved)** |
| 43 | Truncated enhanced BFR (Truncated Enhanced BFR) (one-byte Cᵢ) |
| 44 | Timing advance report (Timing Advance Report) |
| 45 | Truncated sidelink BSR (Truncated Sidelink BSR) |
| 46 | Sidelink BSR (Sidelink BSR) |
| 47 | Reserved |
| 48 | LBT failure (LBT failure) (four bytes) |
| 49 | LBT failure (one byte) |
| 50 | BFR (one-byte Cᵢ) |
| 51 | Truncated BFR (Truncated BFR) (one-byte Cᵢ) |
| 52 | CCCH of a size of 48 bits, except for a RedCap device (CCCH of size 48 bits, except for a RedCap UE). Refer to descriptions of a "CCCH" in TS 38.331. |
| 53 | Recommended bit rate query (Recommended bit rate query) |
| 54 | Multiple entry PHR (Multiple Entry PHR) (four-byte Cᵢ) |
| 55 | Configured grant confirmation (Configured Grant Confirmation) |
| 56 | Multiple entry PHR (one-byte Cᵢ) |
| 57 | Single entry PHR (Single Entry PHR) |
| 58 | C-RNTI |
| 59 | Short truncated BSR (Short Truncated BSR) |
| 60 | Long truncated BSR (Long Truncated BSR) |
| 61 | Short BSR (Short BSR) |
| 62 | Long BSR (Long BSR) |
| 63 | Padding |

The index or the codepoint in a 1^{st} column in Table 1 may be determined by a value of the LCID field. For example, if the value of the LCID field is 000000, the index or the codepoint is 0. The LCID value in a 2^{nd} column in Table 1 is understood as a meaning represented by the LCID field or an implication indicated by the LCID value. For example, if the value of the LCID field is 000000, the index or the codepoint is 0. In this case, the meaning represented by the LCID field is that a MAC PDU includes a CCCH message of a size of 64 bits (that is, a CCCH1 message). The meaning represented by the LCID field includes: identifying a logical channel instance (a logical channel number) corresponding to a MAC SDU, identifying a type of a MAC CE, identifying padding, or the like. A value of an index value may be equal to the value of the LCID field.

Table 1 above is a summary of meanings (LCID values) corresponding to different values (index values) of the LCID field in the MAC subheader format shown in (b) in FIG. 3, and may be referred to as an LCID table. An LCID table mentioned below may also be replaced with a correspondence, a mapping relationship, an association relationship, or the like between the value of the LCID field and the meaning represented by the LCID field.

For example, when a MAC subheader includes an eLCID field, the LCID table mentioned in this application may alternatively be a correspondence between the codepoint, the index, and the meaning (the LCID value) represented by the LCID field, as shown in Table 2 below.

**Table 2:**

| Codepoint (Codepoint) | Index | LCID values |
|---|---|---|
| 0 to 228 | 64 to 292 | Reserved |
| 229 | 293 | Enhanced multiple entry PHR for multiple TRP (Enhanced Multiple Entry PHR for multiple TRP) (four-byte Cᵢ) |
| 230 | 294 | Enhanced multiple entry PHR for multiple TRP (one-byte Cᵢ) |
| 231 | 295 | Enhanced single entry PHR for multiple TRP (Enhanced Single Entry PHR for multiple TRP) |
| 232 | 296 | Enhanced multiple entry PHR (Enhanced Multiple Entry PHR) (four-byte Cᵢ) |
| 233 | 297 | Enhanced multiple entry PHR (one-byte Cᵢ) |
| 234 | 298 | Enhanced single entry PHR (Enhanced Single Entry PHR) |
| 235 | 299 | Enhanced BFR (Enhanced BFR) (one-byte Cᵢ) |
| 236 | 300 | Enhanced BFR (four-byte Cᵢ) |
| 237 | 301 | Truncated enhanced BFR (four-byte Cᵢ) |
| 238 | 302 | Positioning measurement gap activation/deactivation request (Positioning Measurement Gap Activation/Deactivation Request) |
| 239 | 303 | IAB-MT recommended beam indication (IAB-MT Recommended Beam Indication) |
| 240 | 304 | Desired IAB-MT PSD range (Desired IAB-MT PSD range) |
| 241 | 305 | Desired downlink transmit power adjustment (Desired DL Tx Power Adjustment) |
| 242 | 306 | Case-6 timing request (Case-6 Timing Request) |
| 243 | 307 | Desired guard symbols for Case 6 timing (Desired Guard Symbols for Case 6 timing) |
| 244 | 308 | Desired guard symbols for Case 7 timing (Desired Guard Symbols for Case 7 timing) |
| 245 | 309 | Extended short truncated BSR (Extended Short Truncated BSR) |
| 246 | 310 | Extended long truncated BSR (Extended Long Truncated BSR) |
| 247 | 311 | Extended short BSR (Extended Short BSR) |
| 248 | 312 | Extended long BSR (Extended Long BSR) |
| 249 | 313 | Extended pre-emptive BSR (Extended Pre-emptive BSR) |
| 250 | 314 | Beam failure recovery (Beam failure recovery, BFR) (four-byte Cᵢ) |
| 251 | 315 | Truncated BFR (Truncated BFR) (four-byte Cᵢ) |
| 252 | 316 | Multiple entry configured grant confirmation (Multiple Entry Configured Grant Confirmation) |
| 253 | 317 | Sidelink configured grant confirmation (Sidelink Configured Grant Confirmation) |
| 254 | 318 | Desired guard symbols (Desired Guard Symbols) |
| 255 | 319 | Pre-emptive BSR (Pre-emptive BSR) |

In this application, the codepoint and the index value may be replaced with each other for description. Alternatively, the codepoint and the index value may be used to determine each other, and there is a correspondence between the codepoint and the index value. The value of the index value may be equal to a value of the eLCID field. Values of the codepoint are accumulated starting from 0, and are in one-to-one correspondence with values of the eLCID field. For example, a codepoint 0 corresponds to an index 64, and a codepoint 1 corresponds to an index 65. The rest can be deduced by analogy.

In addition, it should be noted that, for the LCID values shown in Table 1 and Table 2 above, refer to descriptions of an existing protocol (for example, Table 6.2.1-2 and Table 6.2.2-2a in TS 38.321). Details are not described herein.

In addition, to facilitate understanding of embodiments of this application, the following several descriptions are provided.

First, in this application, "indicating" may include directly indicating and indirectly indicating. When a piece of indication information is described as indicating A, it may be included that the indication information directly indicates A or indirectly indicates A, but it does not mean that the indication information definitely includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit-end device by sending configuration information to a receive end.

Second, "at least one" shown in this application means one or more, and "a plurality of" means two or more. In addition, in embodiments of this application, "first", "second", and various numeric numbers (for example, "#1" and "#2") are merely for distinguishing for ease of description, and are not used to limit the scope of embodiments of this application. Sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in appropriate cases, so that a solution other than embodiments of this application can be described. In addition, in embodiments of this application, words such as "410" and "420" are merely identifiers for ease of description, and do not limit a sequence of performing steps.

Third, in this application, the word such as "example" or "for example" represents giving an example, an illustration, or a description. Any embodiment or design scheme described as the "example" or "for example" in this application should not be explained as being more preferred or having more advantages than another embodiment or design scheme. Exactly, use of the word such as "example" or "for example" is intended to present a related concept in a specific manner.

Fourth, the "protocol" mentioned in embodiments of this application may be a standard protocol in the communication field, for example, may include an LTE protocol, an NR protocol, and a related protocol applied to a future communication system. This is not limited in this application.

Fifth, in embodiments of this application, "in a case of", "when", and "if" may be used interchangeably sometimes. It should be noted that, when a difference of the terms is not emphasized, meanings to be expressed are consistent.

Sixth, in embodiments of this application, terms and English acronyms and abbreviations, such as radio resource control (RRC), are all examples provided for ease of description, and should not constitute any limitation on this application. This application does not exclude a possibility of defining another term that can implement same or similar functions in an existing or future protocol.

Seventh, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally represents an "or" relationship between the associated objects.

With reference to FIG. 1, the foregoing briefly describes the scenario to which a communication method provided in embodiments of this application can be applied, describes the basic concepts that may be used in embodiments of this application, and describes the LCID field and the indication space of the LCID field in the basic concepts. As described above, currently, the size of the indication space of the LCID field is 64, 57 LCID values have been used, and seven reserved LCID values may serve as the new indications. A problem is that with evolution of the standard, more features are introduced in the standard, and for many of the features, new meanings need to be represented by new LCID values, for indicating the new meanings to the receive end. Seven reserved values have far from met requirements.

This application provides a communication method. The communication method may be applied to the communication system shown in FIG. 1. A first field is set in a MAC subPDU, to create more cases that can be indicated by an LCID value, that is, to increase indication space of an LCID, without increasing a size of a header of the MAC subPDU.

It should be understood that a specific structure of an execution body of the method provided in embodiments of this application is not specifically limited in the following embodiments, provided that communication can be performed according to the method provided in embodiments of this application by running a program that records code of the method provided in embodiments of this application. For example, the method provided in embodiments of this application may be performed by a transmit end and a receive end, or may be functional modules that can invoke a program and execute the program and that is in the transmit end and the receive end.

FIG. 4 is a schematic flowchart of a communication method according to this application. The communication method includes the following steps.

S410: A transmit end determines a MAC subPDU.

For example, the transmit end determines a MAC PDU, where the MAC PDU includes at least one MAC subPDU. For example, a format of the MAC PDU is the format shown in FIG. 2 above. Details are not described herein again. The MAC subPDU shown in step S410 may be any one of the at least one MAC subPDU.

Specifically, the MAC subPDU may include an RRC message, where the RRC message may include one or more of an uplink common control channel UL CCCH message, a UL CCCH1 message, or an uplink dedicated control channel UL DCCH message. For example, a MAC SDU included in the MAC subPDU carries the UL CCCH message, the UL CCCH1 message, or the UL DCCH message.

Further, a header of the MAC subPDU in this embodiment includes a logical channel identity LCID field. For example, the LCID field may be the LCID field shown in (a) in FIG. 3 above; the LCID field may be the LCID field shown in (b) in FIG. 3 above; the LCID field may be the eLCID field shown in (b) in FIG. 3 above; or the LCID field may be the LCID field and the eLCID field shown in (b) in FIG. 3 above.

It should be understood that the foregoing describes, merely by using the examples, possible forms of the LCID field shown and mentioned in this embodiment, and does not constitute any limitation on the protection scope of this application. The LCID field mentioned in this embodiment may alternatively be an LCID field included in a header of a MAC subPDU defined in a future protocol. Examples are not described herein.

For ease of description, the following uses an example in which the LCID field is the LCID field shown in (a) in FIG. 3 for description.

As shown above, the size of the indication space of the LCID field shown in (a) in FIG. 3 is 64. In this embodiment, the indication space of the LCID field may be extended in the following two manners, so that the indication space of the LCID field is greater than 64. It should be noted that that the LCID field is the LCID field shown in (a) in FIG. 3 is merely an example, and does not constitute any limitation on the protection scope of this application. If the LCID field is the eLCID field shown in (a) in FIG. 3, indication space of the eLCID field may also be extended in the following manner of extending the indication space.

Manner 1: Including a first field in the MAC subPDU, to extend the indication space of the LCID field.

In the case shown in Manner 1, the MAC subPDU includes the first field. When values of the first field are different, meanings represented by the LCID field are determined based on different LCID tables. The LCID table may indicate a correspondence between an index value or a codepoint of the LCID field and a meaning represented by the index value or the codepoint of the LCID field, and the index value or the codepoint of the LCID field is determined based on a value of the LCID field.

It can be learned from the foregoing descriptions that that when the values of the first field are different, the meanings represented by the LCID field are determined based on the different LCID tables may be understood as: A meaning represented by the LCID field is determined based on a value of the first field and the value of the LCID field, a meaning represented by the LCID field is related to the LCID field and the first field, or a meaning represented by the LCID field is determined based on the LCID field and the first field, and the LCID table may be understood as a correspondence between an index, a codepoint, and a meaning of the LCID. When the first field is a first value, there is a first correspondence between the index, the codepoint, and the meaning of the LCID. When the first field is a second value, there is a second correspondence between the index, the codepoint, and the meaning of the LCID.

It should be noted that, in this embodiment, that the MAC subPDU determined by the transmit end includes the first field is limited, but a manner of including the first field in the MAC subPDU is not limited and includes but is not limited to the following two possible implementations.

In a possible implementation, the header of the MAC subPDU includes the first field. For example, the first field may be at least one R field included in the header of the MAC subPDU shown in (a) in FIG. 3 above.

In this implementation, a plurality of pieces of indication space that is of the LCID field and whose size is 64 may be determined by combining the at least one R field in the header of the MAC subPDU with the LCID field.

It should be noted that when either of two R fields in the header of the MAC subPDU is used, the used R field is the first field. If the indication space of the LCID field needs to be further extended, the other R field in the two R fields in the header of the MAC subPDU may be used, and the other used R field is the first field or has another name (for example, a third field).

In this implementation, if the LCID field is the LCID field included in the header of the MAC subPDU shown in (a) in FIG. 3 above, a size of the header of the MAC subPDU is one byte, a size of the LCID field is six bits, and a size of the first field is one bit or two bits.

In another possible implementation, the MAC subPDU includes an RRC message, where the RRC message includes the first field.

In this implementation, a plurality of pieces of indication space that is of the LCID field and whose size is 64 may be created by combining at least one bit in the RRC message (for example, a reserved bit in the RRC message) with the LCID field.

In this implementation, if the LCID field is the LCID field included in the header of the MAC subPDU shown in (a) in FIG. 3 above, a size of the header of the MAC subPDU is one byte, a size of the LCID field is six bits, the header of the MAC subPDU further includes two reserved fields, the size of the LCID field is six bits, and a size of each reserved field is one bit.

It should be understood that the foregoing two implementations describe, merely by using the examples, the manner in which the first field may be carried, and do not constitute any limitation on the protection scope of this application. In this embodiment, the first field may alternatively be carried in another position of the MAC subPDU. Examples are not described herein. Alternatively, the first field may be sent to a receive end by using another message. For example, before the transmit end sends the MAC subPDU to the receive end, the transmit end has provided the first field for the receive end. Details are not described herein.

In comparison with the indication space of the LCID field described in the foregoing basic concepts, in this embodiment, the indication space of the LCID field is determined based on the LCID field and the first field, and is no longer determined based only on the LCID field. Therefore, the indication space of the LCID field can be extended, and more indication information can be indicated by the LCID field, thereby enriching service types of a terminal device and improving user experience. For example, in this solution, there may be a plurality of LCID tables that represent values of LCID fields and meanings represented by the LCID fields. For actually determining a meaning represented by the LCID field, a used LCID table may be first determined based on a value of the first field, and then the meaning represented by the LCID field is determined based on a value of the LCID field and the determined LCID table. In comparison with determining the meaning represented by the LCID field based only on the value of the LCID field (for example, Table 1 above), the indication space of the LCID field is extended.

In this embodiment, the LCID tables based on which meanings represented by the LCID fields are determined vary with different values of the first field. For example, when the value of the first field is the first value, the meaning represented by the LCID field is determined based on a first LCID table; or when the value of the first field is the second value, the meaning represented by the LCID field is determined based on a second LCID table.

For ease of understanding, the following describes a correspondence between the value of the first field and the LCID table with reference to specific examples.

Example 1: The first field is one bit.

When the value of the first field is 0, the meaning represented by the LCID field is determined based on the first LCID table. For example, meanings corresponding to different values of the LCID field are shown in Table 1 above. When the value of the first field is 1, the meaning represented by the LCID field is determined based on the second LCID table.

For example, when the value of the first field is 1, meanings corresponding to different values of the LCID field are shown in Table 3 below. Table 3 may be a new table defined in a protocol (for example, a MAC protocol). In Table 3, a meaning corresponding to a value of each LCID field may be the same as or different from the meaning shown in Table 1, as shown in Table 3 below.

**Table 3**

| **Index or** Codepoint | **LCID values** |
|---|---|
| 0 | XXXX |
| 1 | YYYY |
| ... | ... |
| M | ZZZ |
| ... | ... |
| N to P | Reserved |
| ... | ... |
| 63 | UUU |

A 1^{st} column in Table 3 above shows the index value or the codepoint corresponding to the value of the LCID field, and the index value or the codepoint is the same as the index value or the codepoint shown in Table 1 above. A 2^{nd} column shows meanings represented by the LCID field corresponding to different index values or codepoints when the value of the first field is 1, and by way of example but not limitation, the meanings may be the same as or different from the meanings shown in Table 1.

The meaning represented by the LCID field in Table 3 may include one or more of the following:
(a) indicating a type of a reduced capability device (reduced capability device, Redcap) or an enhanced reduced capability device (enhanced reduced capability device, eRedcap);
(b) indicating a request of or a corresponding capability report of message 4 HARQ-ACK repetition on a PUCCH in a RACH process (which is, for example, applied in a non-terrestrial network);
(c) indicating capability limitation of a multi-card UE; and
(d) indicating combination of at least one of the meanings mentioned above, or indicating combination of at least one of the meanings mentioned above with another meaning, for example, indicating both (a) and (b), indicating all (a), (b), and (c), or indicating (a) and another meaning.

It should be understood that the foregoing describes, merely by using the examples, the meanings that may be represented by the different index values in Table 3, and does not constitute any limitation on the protection scope of this application.

### Example 2: The first field is two bits.

When the value of the first field is 00, the meaning represented by the LCID field is determined based on the first LCID table. For example, meanings corresponding to different values of the LCID field are shown in Table 1 above. When the value of the first field is 01, the meanings corresponding to the different values of the LCID field may be for defining a new table, for example, Table a (similar to Table 2). The rest can be deduced by analogy. When the value of the first field is 10, the meanings corresponding to the different values of the LCID field may be for defining a new table, for example, Table b. When the value of the first field is 11, the meanings corresponding to the different values of the LCID field may be for defining a new table, for example, Table c.

### Example 3: The first field is N bits.

There are 2^{N} possible manners for the value of the first field. Therefore, there may be 2^{N} LCID tables. The 2^{N} LCID tables include a conventional LCID table (for example, Table 1), and defined (2^{N}-1) new tables.

For example, when values of the LCID field in different LCID tables are the same, corresponding meanings in the different tables may be the same or may be different.

The foregoing LCID table may also be referred to as a correspondence, a mapping relationship, an association relationship, or the like. A name of information indicating an association relationship between the value of the LCID field and the meaning represented by the LCID field is not limited in this embodiment.

The LCID tables based on which meanings represented by the LCID fields are determined vary with different values of the first field. For example, the transmit end may set the value of the first field based on a feature of the receive end or a current transmission scenario. For example, the value of the first field is as the case shown in Example 1 above, and if the transmit end knows that the receive end is a Redcap device, the transmit end may set the value of the first field to 1. For another example, the value of the first field is as the case shown in Example 1 above, and if the transmit end determines that the current transmission scenario is arequest of or a corresponding capability report of message 4 HARQ-ACK repetition on a PUCCH in a RACH process, the transmit end may set the value of the first field to 1.

It should be understood that the foregoing describes, merely by using the examples, that the transmit end may set the value of the first field based on known information, so that the receive end can determine, in an LCID table indicated by the first field, a meaning represented by the LCID field. This does not constitute any limitation on the protection scope of this application. For example, the value of the first field is random, or the value of the first field may be determined based on historical communication data. Examples are not described herein.

In addition, in the foregoing descriptions, it is assumed that when values of the first field are different, different tables are correspondingly defined. In another implementation, extension may be performed on the basis of an existing table. For example, when values of the first field are different, meanings represented by the LCID value are represented in different areas (each area may include a plurality of rows of the table) of a same table.

Manner 2: Extend a size of the LCID field, to extend the indication space of the LCID field.

In a case shown in Manner 2, the size of the LCID field is N bits, and N is an integer greater than 6.

Optionally, in the case shown in Manner 2, at least one bit in R bits occupied by a reserved field in the header of the MAC subPDU serves as a part of the LCID field, and is combined with an original LCID field to form a new LCID field that includes more bits.

For example, it is assumed that one R field in the header of the MAC subPDU is combined with the original LCID field to form a seven-bit LCID field; and it is assumed that two R fields in the header of the MAC subPDU are combined with the original LCID field to form an eight-bit LCID field.

In the case shown in Manner 2, the LCID field may indicate more meanings, and this is equivalent to forming larger indication space. For example, the LCID field may indicate indication space whose size is 128 or 256.

Different from the case shown in Manner 1, in the case shown in Manner 2, a size of the original Table 1 is extended (more values greater than 63 are added on the basis of original 64 values, for identifying more meanings), instead of defining one or more new tables.

In the case shown in Manner 2, if the header of the MAC subPDU is the header of the MAC subPDU shown in (a) in FIG. 3 above, a size of the header of the MAC subPDU is one byte, a size of the LCID field is greater than six bits, and the header of the MAC subPDU further includes less than two reserved fields.

Further, after determining the MAC subPDU, the transmit end may send the MAC subPDU to the receive end. The method procedure shown in FIG. 4 further includes the following step.

S420: The transmit end sends the MAC subPDU to the receive end.

In this embodiment, the transmit end sends the MAC subPDU to the receive end during random access procedure (including four-step random access procedure or two-step random access procedure). For example, the transmit end may send the MAC subPDU to the receive end by using a message 3 (message 3) or a message A (message A).

In a possible implementation, the transmit end is a terminal device, the receive end is an access network device, and the terminal device may send the MAC subPDU to the access network device over a transmission link between the terminal device and the access network device.

In another possible implementation, the transmit end is an access network device, the receive end is a terminal device, and the access network device may send the MAC subPDU to the terminal device over a transmission link between the terminal device and the access network device.

It should be understood that, sending of the MAC subPDU herein is not limited to a final form for which sending is performed on an air interface. For example, the transmit end may first perform further processing on the MAC PDU of the MAC subPDU, convert the MAC PDU into a transport block or another form for which transmission can be performed on the air interface, and perform sending on the air interface. Because sent useful information is included in the MAC subPDU, it is described herein as sending the MAC subPDU.

It should be understood that specific entities of the transmit end and the receive end are not limited in this embodiment, and any transceiver device that performs transmission of the MAC subPDU may serve as the transmit end and the receive end in this embodiment.

For example, when the transmit end sends the MAC subPDU to the receive end, a receive end that supports parsing of the MAC subPDU constructed in Manner 1 and Manner 2 can correctly parse the received MAC subPDU; and after receiving the MAC subPDU, a receive end that does not support parsing of the MAC subPDU constructed in Manner 1 and Manner 2 may parse the MAC subPDU based on a MAC subPDU format defined in an existing protocol, resulting in a parsing failure. For example, some receive ends consider that the reserved field in the header of the MAC subPDU is definitely 0. Consequently, if the transmit end sends, to such receive ends, a MAC subPDU in which an R field is 1, it is very likely that the receive end cannot correctly parse the MAC subPDU or directly ignores the R field, resulting in inconsistent understanding between the transmit end and the receive end.

Specifically, in this embodiment, to avoid that the transmit end sends the MAC subPDU to the receive end that cannot correctly parse the MAC subPDU, before the MAC subPDU is sent, it is determined that the receive end can correctly parse the MAC subPDU.

In a possible implementation, that the receive end supports parsing of the MAC subPDU in this embodiment may be understood as that the receive end can identify or correctly understand a MAC subPDU format, supports the MAC subPDU format, supports the MAC subPDU, can parse the MAC subPDU format, or the like.

When the first field is the at least one R field in the header of the MAC subPDU, the MAC subPDU format may be a MAC subPDU that is of a header that is of the MAC subPDU and that includes at least one R field whose value may not be 0.

Alternatively, when the first field is a field in the RRC message in the MAC subPDU, the MAC subPDU format may be a MAC subPDU that includes an RRC message whose corresponding field may not be 0.

In another possible implementation, that the receive end supports parsing of the MAC subPDU in this embodiment may be understood as that the receive end can identify or correctly understand a format of the header of the MAC subPDU, supports the format of the header of the MAC subPDU, supports the header of the MAC subPDU, can parse the format of the header of the MAC subPDU, or the like.

When the first field is the at least one R field in the header of the MAC subPDU, the format of the header of the MAC subPDU may be a header of a MAC subPDU that includes at least one R field whose value may not be 0.

For example, in this embodiment, the transmit end may determine, in the following two possible implementations, that the transmit end can parse the MAC subPDU.

In a possible implementation, the receive end sends specific indication information to the transmit end, and the indication information indicates whether the receive end supports parsing of the MAC subPDU. For example, if an indication information value is a specific value (for example, true (true)), it indicates that the receive end supports parsing of the MAC subPDU; or if a value is false (false), it indicates that the receive end does not support parsing of the MAC subPDU. In addition, if the indication information does not exist, it also indicates that the receive end does not support parsing of the MAC subPDU. Alternatively, if the indication information is sent, it indicates that the receive end supports parsing of the MAC subPDU; or the indication information is not sent, it indicates that the receive end does not support parsing of the MAC subPDU.

For example, the MAC subPDU is the MAC subPDU shown in Manner 1. The indication information indicates whether the receive end supports parsing of a MAC subPDU in which a represented meaning is determined based on both the first field and the LCID field.

For example, the MAC subPDU is the MAC subPDU that includes the first field and that is shown in Manner 1, and the first field is carried in the header of the MAC subPDU. The indication information indicates whether the receive end supports parsing of a MAC subPDU with a header that is of the MAC subPDU and that is with at least one reserved field whose value may not be 0.

For another example, the MAC subPDU is the MAC subPDU that includes the first field and that is shown in Manner 1, and the first field is carried in the RRC message in the MAC subPDU. The indication information indicates whether the receive end supports parsing of a MAC subPDU determined based on the RRC message and the LCID field.

For example, the MAC subPDU is the MAC subPDU shown in Manner 2. The indication information indicates whether the receive end supports parsing of a MAC subPDU with an LCID field whose size is greater than six bits.

For example, the indication information is carried in dedicated signaling, multicast signaling, or broadcast signaling.

For example, the receive end is the access network device, and the transmit end is the terminal device. The dedicated signaling may be RRC signaling. The broadcast signaling may be for a terminal device in a cell or a terminal device in an area (for example, the broadcast signaling is a management information block (management information block, MIB), a system information block 1 (System Information Block 1, SIB1), or another SIB). The multicast signaling may be for a group of specific terminal devices.

In this implementation, after receiving the indication information, the transmit end may determine, based on the indication information, whether the receive end supports parsing of the MAC subPDU, and send the MAC subPDU to the receive end when the receive end supports parsing of the MAC subPDU.

In another possible implementation, the transmit end determines, depending on whether the receive end supports a feature indicated by the MAC subPDU, whether the receive end supports parsing of the MAC subPDU.

In this implementation, the receive end may not send additional explicit indication information to indicate whether parsing of the MAC subPDU is supported, but the transmit end determines, by reading existing information about the receive end, whether the receive end can parse the MAC subPDU.

For example, the information about the receive end indicates that the receive end supports a redcap feature, and a MAC subPDU in a new format (to be specific, the MAC subPDU determined in Manner 1 or Manner 2) needs to be used for an indication of a redcap type. If the transmit end knows that the receive end supports the redcap feature, it may be determined that the receive end supports interpretation of the MAC subPDU in the new format.

In addition, it should be noted that, the foregoing step that the transmit end determines that the receive end supports parsing of the MAC subPDU is optional. For example, the transmit end may send the MAC subPDU to the receive end when receiving the indication information, without determining that the receive end supports parsing of the MAC subPDU.

Further, after receiving the MAC subPDU, the receive end may determine the meaning represented by the LCID field. The method procedure shown in FIG. 4 further includes the following step.

S430: The receive end determines the meaning represented by the LCID field.

In a possible implementation, the MAC subPDU received by the receive end is the MAC subPDU determined in Manner 1, and the receive end may determine, based on the value of the first field and the value of the LCID field, the meaning represented by the LCID field.

For example, the receive end determines the LCID table based on the value of the first field, and then determines, based on the value of the LCID field and the LCID table, the meaning represented by the LCID field.

When the LCID table is a correspondence between the index value of the LCID field and the meaning represented by the index value, the index value of the LCID field may be determined based on the value of the LCID field. Therefore, after the LCID table is determined based on the value of the first field, the meaning represented by the index value may be determined based on the index value of the LCID field and the LCID table.

When the LCID table is a correspondence between the codepoint of the LCID field and the meaning represented by the codepoint, the codepoint of the LCID field may be determined based on the value of the LCID field. Therefore, after the LCID table is determined based on the value of the first field, the meaning represented by the codepoint may be determined based on the codepoint of the LCID field and the LCID table.

In another possible implementation, the MAC subPDU received by the receive end is the MAC subPDU determined in Manner 2, and the receive end may determine, based on the value of the LCID field, the meaning represented by the LCID field.

In the communication method shown in FIG. 4, in addition to the LCID field, the MAC subPDU determined by the transmit end further includes the first field that affects the meaning represented by the LCID field. Alternatively, the size of the LCID field may be greater than six bits, to extend the indication space of the LCID field, so that more indication information can be indicated by the LCID field, thereby enriching service types of the terminal device and improving user experience.

It should be understood that, sequence numbers of the foregoing processes do not mean execution sequences. The execution sequences of the processes should be determined based on functions and internal logic of the processes, and should not constitute any limitation on implementation processes of embodiments of this application. For example, step S410 in the communication method shown in FIG. 4 is optional. To be specific, the transmit end may send, to the receive end, the MAC subPDU obtained in Manner 1 or Manner 2. However, a determining step performed before the transmit end performs sending is not mandatory. For example, the transmit end locally stores a to-be-sent MAC subPDU before sending the MAC subPDU, or the transmit end generates the MAC subPDU before sending the MAC subPDU.

It should be further understood that, in embodiments of this application, unless otherwise stated or there is a logic conflict, terms and/or descriptions of different embodiments are consistent and may be mutually referenced, and technical features in different embodiments may be combined based on an internal logical relationship thereof, to form a new embodiment.

It should be further understood that, in some of the foregoing embodiments, a device (for example, the transmit end or the receive end) in an existing network architecture is mainly used as an example for description. It should be understood that a specific form of the device is not limited in embodiments of this application. For example, all devices that can implement a same function in the future are applicable to embodiments of this application.

It may be understood that methods and operations implemented by the device (for example, the transmit end or the receive end) in the foregoing method embodiments may alternatively be implemented by a component (for example, a chip or a circuit) of the device.

The foregoing describes in detail, with reference to FIG. 4, the communication method provided in embodiments of this application. The foregoing communication method is mainly described from a perspective of interaction between the transmit end and the receive end. It may be understood that to implement the foregoing functions, the transmit end and the receive end include corresponding hardware structures and/or software modules for performing the functions.

A person skilled in the art may be aware that, with reference to the examples described in embodiments disclosed in this specification, units and algorithm steps can be implemented by hardware or a combination of the hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

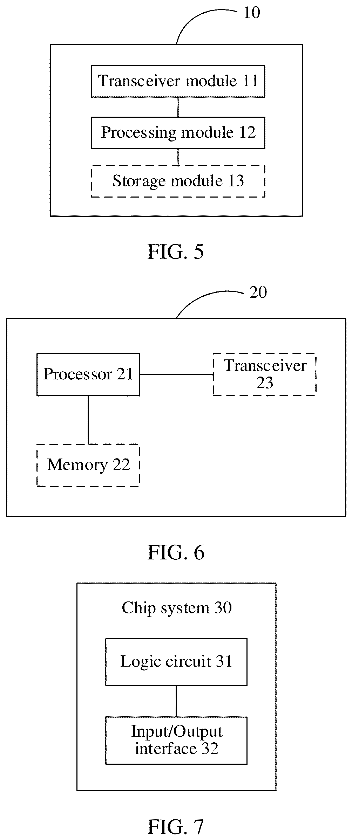

The following describes in detail, with reference to FIG. 5 to FIG. 7, communication apparatuses provided in this application. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmit end or a receive end may be divided based on the foregoing method examples. For example, functional modules may be divided based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. The following uses an example in which the functional modules are divided based on the corresponding functions for description.

FIG. 5 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending-related operations, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement an action of the device in the foregoing method embodiments.

In a first design, the apparatus 10 may correspond to the transmit end in the foregoing method embodiments, or may be a component (for example, a chip) of the transmit end.

The apparatus 10 may implement a corresponding step or procedure performed by the transmit end in the foregoing method embodiments. The transceiver module 11 may be configured to perform the sending and receiving-related operations of the transmit end in the foregoing method embodiments. The processing module 12 may be configured to perform a processing-related operation of the transmit end in the foregoing method embodiments.

In a possible implementation, the processing module 12 is configured to determine a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, and the MAC subPDU includes a first field. The transceiver module 11 is configured to send the MAC subPDU, where when values of the first field are different, meanings represented by the LCID field are determined based on different LCID tables.

In another possible implementation, the processing module 12 is configured to determine a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, a size of the header of the MAC subPDU is one byte, a size of the LCID field is N bits, and N is an integer greater than 6. The transceiver module 11 is configured to send the MAC subPDU.

When the apparatus 10 is configured to perform the method in FIG. 4, the transceiver module 11 may be configured to perform steps of receiving and sending information in the method, for example, step S420; and the processing module 12 may be configured to perform a processing step in the method, for example, step S410.

It should be understood that a specific process in which the units perform the foregoing corresponding steps is described in detail in the foregoing method embodiments. For brevity, details are not described herein again.

In another design, the apparatus 10 may correspond to the receive end in the foregoing method embodiments, or may be a component (for example, a chip) of the receive end.

The apparatus 10 may implement a corresponding step or procedure performed by the receive end in the foregoing method embodiments. The transceiver module 11 may be configured to perform the sending and receiving-related operations of the receive end in the foregoing method embodiments. The processing module 12 may be configured to perform a processing-related operation of the receive end in the foregoing method embodiments.

In a possible implementation, the transceiver module 11 is configured to receive a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, and the MAC subPDU includes a first field. The processing module 12 is configured to determine, based on a value of the first field and a value of the LCID field, a meaning represented by the LCID field, where when values of the first field are different, meanings represented by the LCID field are determined based on different LCID tables.

In another possible implementation, the transceiver module 11 is configured to receive a media access control MAC subpacket data unit PDU, where the MAC subPDU includes an RRC message, the RRC message includes an uplink common control channel UL CCCH message, a UL CCCH1 message, or an uplink dedicated control channel UL DCCH message, a header of the MAC subPDU includes a logical channel identity LCID field, a size of the header of the MAC subPDU is one byte, a size of the LCID field is N bits, and N is an integer greater than 6. The processing module 12 is configured to determine, based on a value of the LCID field, a meaning represented by the LCID field.

When the apparatus 10 is configured to perform the method in FIG. 4, the transceiver module 11 may be configured to perform steps of receiving and sending information in the method, for example, step S420; and the processing module 12 may be configured to perform a processing step in the method, for example, step S430.

It should be understood that a specific process in which the units perform the foregoing corresponding steps is described in detail in the foregoing method embodiments. For brevity, details are not described herein again.

It should be further understood that the apparatus 10 herein is presented in a form of a functional module. The term "module" herein may be an application specific integrated circuit (application specific integrated circuit, ASIC), an electronic circuit, a processor (for example, a shared processor, a dedicated processor, or a group processor) configured to execute one or more software or firmware programs, and a memory, a combinational logic circuit, and/or another appropriate component that supports the described function. In an optional example, a person skilled in the art may understand that the apparatus 10 may be specifically the transmit end or the receive end in the foregoing embodiments, and may be configured to perform procedures and/or steps corresponding to the transmit end or the receive end in the foregoing method embodiments.

The apparatus 10 in the foregoing solutions has a function of implementing a corresponding step performed by the device (for example, the transmit end or the receive end) in the foregoing methods. The function may be implemented by hardware, or may be implemented by hardware executing corresponding software. The hardware or the software includes one or more modules corresponding to the foregoing function. For example, the transceiver module may be replaced with a transceiver machine (for example, a sending unit in the transceiver module may be replaced with a transmitter machine, and a receiving unit in the transceiver module may be replaced with a receiver machine), and another unit, for example, the processing module, may be replaced with a processor, to separately perform receiving and sending operations and a related processing operation in the method embodiments.

In addition, the transceiver module 11 may alternatively be a transceiver circuit (for example, may include a receiving circuit and a sending circuit), and the processing module may be a processing circuit.

FIG. 6 is a diagram of another communication apparatus 20 according to an embodiment of this application. The apparatus 20 includes a processor 21. The processor 21 is configured to execute a computer program or instructions stored in a memory 22, or read data/signaling stored in a memory 22, to perform the methods in the foregoing method embodiments. Optionally, there are one or more processors 21.

Optionally, as shown in FIG. 6, the apparatus 20 further includes the memory 22. The memory 22 is configured to store the computer program or the instructions and/or the data. The memory 22 and the processor 21 may be integrated together, or may be disposed separately. Optionally, there are one or more memories 22.

Optionally, as shown in FIG. 6, the apparatus 20 further includes a transceiver 23. The transceiver 23 is configured to receive and/or send a signal. For example, the processor 21 is configured to control the transceiver 23 to receive and/or send the signal.

In a solution, the apparatus 20 is configured to implement an operation performed by the transmit end in the foregoing method embodiments.

In another solution, the apparatus 20 is configured to implement an operation performed by the receive end in the foregoing method embodiments.

It should be understood that, the processor mentioned in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may serve as an external cache. By way of example but not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that, the memory described in this specification is intended to include, but is not limited to, these memories and any memory of another appropriate type.

FIG. 7 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to cause the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement an operation performed by the transmit end or the receive end in the foregoing method embodiments.

For example, the logic circuit 31 is configured to implement a processing-related operation performed by the transmit end or the receive end in the foregoing method embodiments; and the input/output interface 32 is configured to implement sending and/or receiving-related operations performed by the transmit end or the receive end in the foregoing method embodiments.

An embodiment of this application further provides a computer-readable storage medium. The computer-readable storage medium stores computer instructions used to implement the method performed by the transmit end or the receive end in the foregoing method embodiments.

For example, when a computer program is executed by a computer, the computer is caused to implement the method performed by the transmit end or the receive end in the foregoing method embodiments.

An embodiment of this application further provides a computer program product, including instructions. When the instructions are executed by a computer, the method performed by the transmit end or the receive end in the foregoing method embodiments is implemented.

An embodiment of this application further provides a communication system, including the foregoing transmit end and receive end.

For explanations and beneficial effects of related content in any one of the apparatuses provided above, refer to the corresponding method embodiments provided above. Details are not described herein again.

In the several embodiments provided in this application, it should be understood that the disclosed apparatuses and methods may be implemented in other manners. For example, the apparatus embodiments described above are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or a part of the foregoing embodiments may be implemented by software, hardware, firmware, or any combination thereof. When the software is used for implementation, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium includes but is not limited to various media that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining a media access control MAC subpacket data unit PDU, wherein the MAC subPDU comprises a radio resource control RRC message, the RRC message comprises an uplink common control channel UL CCCH message, a UL CCCH1 message, or an uplink dedicated control channel UL DCCH message, a header of the MAC subPDU comprises a logical channel identity LCID field, and the MAC subPDU comprises a first field; and
sending the MAC subPDU, wherein
when values of the first field are different, meanings represented by the LCID field are determined based on different LCID tables.

2. The method according to claim 1, wherein that the MAC subPDU comprises the first field comprises:
the header of the MAC subPDU comprises the first field; or the RRC message comprises the first field.

3. The method according to claim 1 or 2, wherein the LCID table is a correspondence between an index value of the LCID field and a meaning represented by the index value of the LCID field.

4. The method according to any one of claims 1 to 3, wherein before sending the MAC subPDU, the method further comprises:
determining that a receive end supports parsing of the MAC subPDU.

5. The method according to claim 4, wherein the determining that the receive end supports parsing of the MAC subPDU comprises:
receiving indication information, wherein the indication information indicates that the receive end supports parsing of the MAC subPDU; or
determining, depending on whether the receive end supports a feature indicated by the MAC subPDU, that the receive end supports parsing of the MAC subPDU.

6. The method according to claim 5, wherein the indication information is carried in dedicated signaling, multicast signaling, or broadcast signaling.

7. The method according to any one of claims 1 to 6, wherein the sending the MAC subPDU comprises:
sending the MAC subPDU during random access procedure.

8. The method according to any one of claims 1 to 7, wherein if the first field is carried in the header of the MAC subPDU, a size of the header of the MAC subPDU is one byte, a size of the LCID field is six bits, and a size of the first field is one bit or two bits.

9. The method according to any one of claims 1 to 7, wherein if the first field is carried in the RRC message in the MAC subPDU, a size of the header of the MAC subPDU is one byte, the header of the MAC subPDU further comprises two reserved fields, a size of the LCID field is six bits, and a size of each reserved field is one bit.

10. A communication method, comprising:
receiving a media access control MAC subpacket data unit PDU, wherein the MAC subPDU comprises a radio resource control RRC message, the RRC message comprises an uplink common control channel UL CCCH message, a UL CCCH1 message, or an uplink dedicated control channel UL DCCH message, a header of the MAC subPDU comprises a logical channel identity LCID field, and the MAC subPDU comprises a first field; and
determining, based on a value of the first field and a value of the LCID field, a meaning represented by the LCID field, wherein
when values of the first field are different, meanings represented by the LCID field are determined based on different LCID tables.

11. The method according to claim 10, wherein that the MAC subPDU comprises the first field comprises:
the header of the MAC subPDU comprises the first field; or the RRC message comprises the first field.

12. The method according to claim 10 or 11, wherein the LCID table is a correspondence between an index value of the LCID field and a meaning represented by the index value of the LCID field.

13. The method according to any one of claims 10 to 12, wherein before receiving the MAC subPDU, the method further comprises:
sending indication information, wherein the indication information indicates that parsing of the MAC subPDU is supported.

14. The method according to claim 13, wherein the indication information is carried in dedicated signaling, multicast signaling, or broadcast signaling.

15. The method according to any one of claims 10 to 14, wherein the receiving the MAC subPDU comprises:
receiving the MAC subPDU during random access procedure.

16. The method according to any one of claims 10 to 15, wherein if the first field is carried in the header of the MAC subPDU, a size of the header of the MAC subPDU is one byte, a size of the LCID field is six bits, and a size of the first field is one bit or two bits.

17. The method according to any one of claims 10 to 15, wherein if the first field is carried in the RRC message in the MAC subPDU, a size of the header of the MAC subPDU is one byte, the header of the MAC subPDU further comprises two reserved fields, a size of the LCID field is six bits, and a size of each reserved field is one bit.

18. A communication apparatus, wherein the apparatus comprises:
a processing unit, configured to determine a media access control MAC subpacket data unit PDU, wherein the MAC subPDU comprises a radio resource control RRC message, the RRC message comprises an uplink common control channel UL CCCH message, a UL CCCH1 message, or an uplink dedicated control channel UL DCCH message, a header of the MAC subPDU comprises a logical channel identity LCID field, and the MAC subPDU comprises a first field; and
a transceiver unit, configured to send the MAC subPDU, wherein
when values of the first field are different, meanings represented by the LCID field are determined based on different LCID tables.

19. A communication apparatus, wherein the apparatus comprises:
a transceiver unit, configured to receive a media access control MAC subpacket data unit PDU, wherein the MAC subPDU comprises a radio resource control RRC message, the RRC message comprises an uplink common control channel UL CCCH message, a UL CCCH1 message, or an uplink dedicated control channel UL DCCH message, a header of the MAC subPDU comprises a logical channel identity LCID field, and the MAC subPDU comprises a first field; and
a processing unit, configured to determine, based on a value of the first field and a value of the LCID field, a meaning represented by the LCID field, wherein
when values of the first field are different, meanings represented by the LCID field are determined based on different LCID tables.

20. A communication apparatus, comprising:
a processor, configured to execute a computer program stored in a memory, to cause the apparatus to perform the method according to any one of claims 1 to 9; or to cause the apparatus to perform the method according to any one of claims 10 to 17.

21. A computer program product, wherein the computer program product comprises instructions for performing the method according to any one of claims 1 to 17.

22. A computer-readable storage medium, wherein the computer-readable storage medium stores a computer program; and when the computer program runs on a computer, the computer is caused to perform the method according to any one of claims 1 to 17.
